# EUROPEAN PATENT SPECIFICATION

(11) **EP 3 061 914 B1**
(45) Date of publication and mention of the grant of the patent: **03.01.2024**
(21) Application number: 16157182.3
(22) Date of filing: 24.02.2016
(51) Int. Cl.: F01D 5/20

(54) **TURBINE ROTOR BLADE AND GAS TURBINE ENGINE**
TURBINENLAUFSCHAUFEL UND GASTURBINENKRAFTWERK
AUBE ROTORIQUE DE TURBINE ET MOTEUR À TURBINE À GAZ

(30) Priority: 25.02.2015 US 201514631409
(43) Date of publication of application: 31.08.2016
(73) Proprietor: General Electric Technology GmbH, 5400 Baden (CH)
(72) Inventor: CHOUHAN, Rohit, 560066 Bangalore (IN); SONI, Sumeet, 560066 Bangalore (IN); NEVILLE, Jason Adam, Greenville, SC 29615 (US)
(74) Representative: Novagraaf Group

(56) References cited:
- EP-A1- 2 378 075
- EP-A1- 2 725 195
- EP-A1- 2 746 536
- EP-A2- 1 541 806
- EP-A2- 2 243 930

## Description

### FIELD OF THE INVENTION

The invention relates to a turbine rotor blade, and to a gas turbine engine having turbine rotor blades forming a plurality of turbine stages.

### BACKGROUND OF THE INVENTION

The subject matter disclosed herein relates to turbine systems and, more particularly, to a turbine rotor blade with enhanced cooling and reduced tip leakage losses.

In a gas turbine engine, air pressurized in a compressor is used to combust a fuel in a combustor to generate a flow of hot combustion gases, whereupon such gases flow downstream through one or more turbines so that energy can be extracted therefrom. In accordance with such a turbine, generally, rows of circumferentially spaced turbine rotor blades extend radially outwardly from a supporting rotor disk. Each blade typically includes a dovetail that permits assembly and disassembly of the blade in a corresponding dovetail slot in the rotor disk, as well as an airfoil that extends radially outwardly from the dovetail and interacts with the flow of the working fluid through the engine.

The airfoil has a generally concave pressure side and generally convex suction side extending axially between corresponding leading and trailing edges and radially between a root and a tip. It will be understood that the blade tip is spaced closely to a radially outer turbine shroud for minimizing leakage therebetween of the combustion gases flowing downstream between the turbine blades. Improved efficiency of the engine is obtained by minimizing the tip clearance or gap such that leakage is prevented, but this strategy is limited somewhat by the different thermal and mechanical expansion and contraction rates between the rotor blades and the turbine shroud and the motivation to avoid an undesirable scenario of having the tip rub against the shroud during operation.

In addition, because turbine blades are bathed in hot combustion gases, effective cooling is required for ensuring a useful part life. Typically, the blade airfoils are hollow and disposed in flow communication with the compressor so that a portion of pressurized air bled therefrom is received for use in cooling the airfoils. Airfoil cooling is quite sophisticated and may be employed using various forms of internal cooling channels and features, as well as cooling holes through the outer walls of the airfoil for discharging the cooling air. Nevertheless, airfoil tips are particularly difficult to cool since they are located directly adjacent to the turbine shroud and are heated by the hot combustion gases that flow through the tip gap. Accordingly, a portion of the air channeled inside the airfoil of the blade is typically discharged through the tip for the cooling thereof.

Tip portions of blades often include a pocket that the cooling air is discharged to, but the cooling air is typically forced to be expelled radially outwardly over the top of the pocket walls, thereby not utilizing the high pressure cooling flow to contribute to produce work/torque.

EP 1541806 discloses an unshrouded rotor blade comprising an aerofoil, there being provided at a radially outer extremity of the aerofoil a gutter which is wider than the aerofoil adjacent the trailing edge thereof, wherein at least a part of the gutter is offset towards the aerofoil pressure surface.

EP 2378075 discloses a turbine blade for a gas turbine engine that has an aerofoil portion extending from a root to a tip. The tip carries winglets. A gutter extends across the tip to entrain gas leaking around the tip (over tip leakage).

EP2746536 discloses a rotor stage of a turbine that has a rotational axis, a shroud and radially inward thereof a turbine blade defined partly by a pressure side wall, a suction side wall, and a tip portion. The tip portion has a pressure side tip rib and a tip cavity floor defining a tip cavity.

EP 2725195 discloses a turbine blade where the suction side wall of the airfoil defines an overhang located up to 50% of the suction surface length from the leading edge of the airfoil.

### BRIEF DESCRIPTION OF THE INVENTION

According to one aspect of the invention, a turbine rotor blade is provided as claimed in claim 1.

According to another aspect of the invention, a gas turbine engine is provided as claimed in claim 9.

These and other advantages and features will become more apparent from the following description taken in conjunction with the drawings.

### BRIEF DESCRIPTION OF THE DRAWING

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic illustration of a gas turbine engine;
FIG. 2 is a perspective view of a turbine rotor blade of the gas turbine engine;
FIG. 3 is a perspective view of a trailing edge of the turbine rotor blade;
FIG. 4 is a sectional view of the trailing edge of the turbine rotor blade; and
FIG. 5 is a perspective view of the trailing edge of the turbine rotor blade illustrating another aspect of the invention.

The detailed description explains embodiments of the invention, together with advantages and features, by way of example with reference to the drawings.

### DETAILED DESCRIPTION OF THE INVENTION

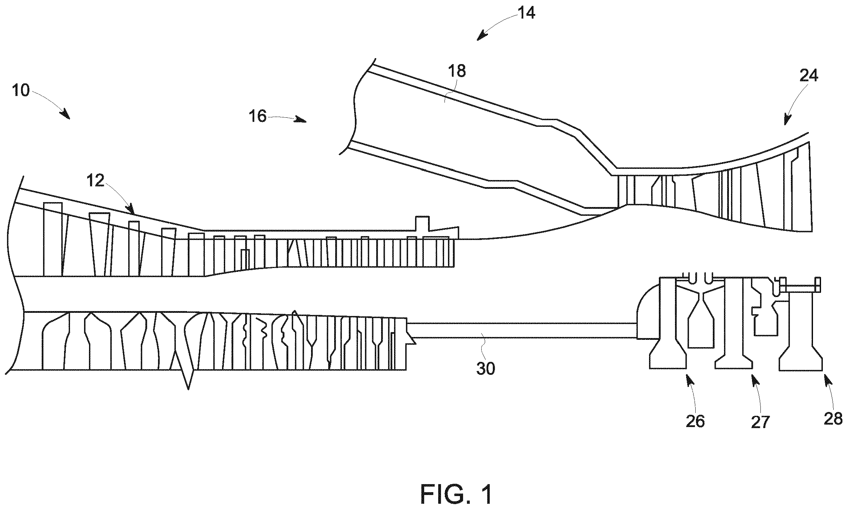

Referring to FIG. 1, a turbine system, such as a gas turbine engine 10, constructed in accordance with an exemplary embodiment of the present invention is schematically illustrated. The gas turbine engine 10 includes a compressor section 12 and a plurality of combustor assemblies 16 arranged in a can annular array, one of which is indicated at 14. The combustor assembly 16 is configured to receive fuel from a fuel supply (not illustrated) and a compressed air from the compressor section 12. The fuel and compressed air are passed into a combustor chamber 18 and ignited to form a high temperature, high pressure combustion product or air stream that is used to drive a turbine 24. The turbine 24 includes a plurality of stages 26-28 that are operationally connected to the compressor 12 through a compressor/turbine shaft 30 (also referred to as a rotor).

In operation, air flows into the compressor 12 and is compressed into a high pressure gas. The high pressure gas is supplied to the combustor assembly 14 and mixed with fuel, for example natural gas, fuel oil, process gas and/or synthetic gas (syngas), in the combustor chamber 18. The fuel/air or combustible mixture ignites to form a high pressure, high temperature combustion gas stream, which is channeled to the turbine 24 and converted from thermal energy to mechanical, rotational energy.

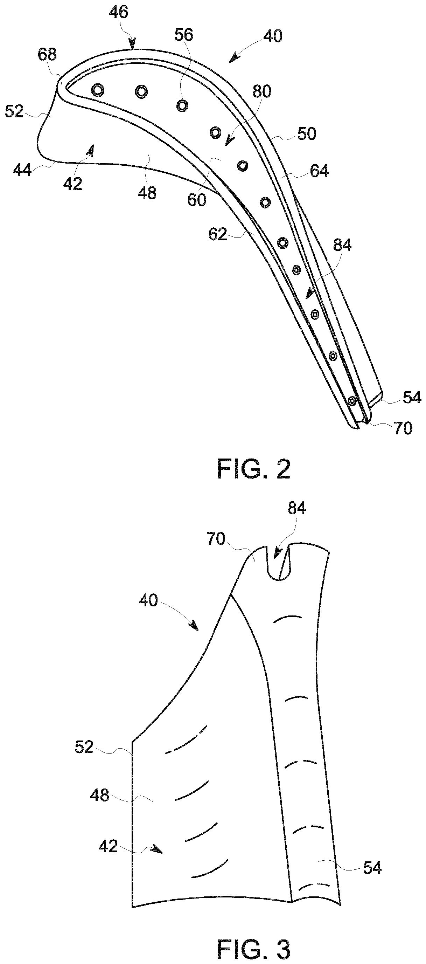

Referring now to FIGS. 2, 3 and 5, with continued reference to FIG. 1, a perspective view of a portion of a turbine rotor blade 40 (also referred to as a "turbine bucket," "turbine blade airfoil" or the like) is illustrated. It is to be appreciated that the turbine rotor blade 40 may be located in any stage of the turbine 24. In one embodiment, the turbine rotor blade 40 is located within the illustrated first stage (i.e., stage 26) of the turbine 24. Although only three stages are illustrated, it is to be appreciated that more or less stages may be present. In any event, the turbine rotor blade 40 includes a main body portion 42 that extends from a root portion 44 to a tip portion 46. The main body portion 42 of the turbine rotor blade 40 includes a pressure side wall 48 and a suction side wall 50, where the geometry of the turbine rotor blade 40 is configured to provide rotational force for the turbine 24 as fluid flows over the turbine rotor blade 40. As depicted, the suction side wall 50 is convex-shaped and the pressure side wall 48 is concave-shaped. The main body portion 42 further includes a leading edge 52 and a trailing edge 54. Although the following discussion primarily focuses on gas turbines, the concepts discussed are not limited to gas turbine engines and may be applied to any rotary machine employing turbine blades.

The pressure side wall 48 and the suction side wall 50 are spaced apart in the circumferential direction over the entire radial span of the turbine rotor blade 40 to define at least one internal flow chamber or channel for channeling cooling air through the turbine rotor blade 40 for cooling thereof. Cooling air is typically bled from the compressor section 12 in any conventional manner. The inside of the turbine airfoil blade 40 may have any configuration including, for example, serpentine flow channels with various turbulators therein for enhancing cooling air effectiveness, with cooling air being discharged through at least one, but typically and according the invention a plurality of outlet holes 56 located at the tip portion 46 of the turbine rotor blade 40 and, more particularly, proximate a squealer cavity 80 that will be described in detail below in conjunction with the tip portion 46.

The tip portion 46 includes a tip plate 60 disposed atop the radially outer ends of the pressure side wall 48 and the suction side wall 50, where the tip plate 60 bounds the internal cooling cavities. The tip plate 60 may be integral to the turbine rotor blade 40 or may be welded into place. A pressure tip wall 62 and a suction tip wall 64 may be formed on the tip plate 60. Generally, the pressure tip wall 62 extends radially outwardly from the tip plate 60 and extends axially from a tip leading edge 68 to a tip trailing edge 70. Generally, the pressure tip wall 62 forms an angle with the tip plate 60 that is approximately 90°, though this may vary. The path of pressure tip wall 62 is adjacent to or near the termination of the pressure side wall 48 (i.e., at or near the periphery of the tip plate 60 along the pressure side wall 48).

Similarly, the suction tip wall 64 generally extends radially outwardly from the tip plate 60 and extends axially from the tip leading edge 68 to the tip trailing edge 70.

The path of the suction tip wall 64 is adjacent to or near the termination of the suction side wall 50 (i.e., at or near the periphery of the tip plate 60 along the suction side wall 50). The height and width of the pressure tip wall 62 and/or the suction tip wall 64 may be varied depending on best performance and the size of the overall turbine assembly. As shown, the pressure tip wall 62 and/or the suction tip wall 64 may be approximately rectangular in shape, although other shapes are also possible.

The pressure tip wall 62 and the suction tip wall 64 generally form what is referred to herein as the squealer cavity 80. The squealer cavity 80 may include any radially inward extending depression or cavity formed on or within the tip portion 46. Generally, the squealer cavity 80 has a similar shape or form as the turbine rotor blade 40, though other shapes are possible, and is typically bound by the pressure tip wall 62, the suction tip wall 64, and a radially inner floor, which herein has been described as the tip plate 60.

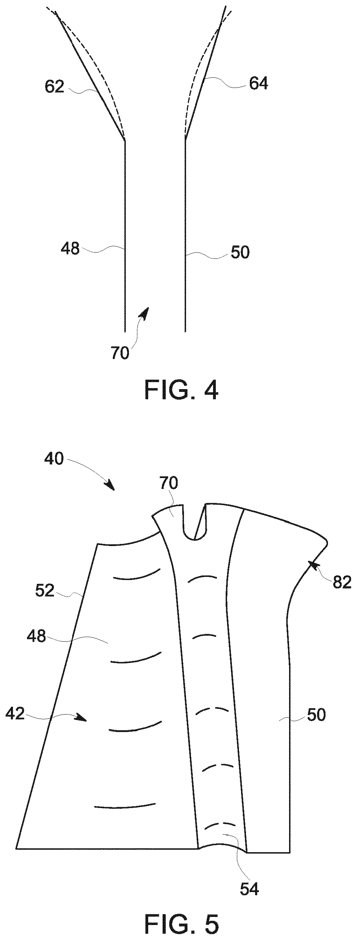

As best illustrated in FIGS. 3 and 5, the tip portion 46 of the turbine rotor blade 40 includes at least one winglet 82 located proximate the tip trailing edge 70. In some embodiments, the at least one winglet 82 is located immediately adjacent the extreme location of the tip trailing edge 70. The phrase "at least one" is employed to describe the at least one winglet 82 based on the fact that in one embodiment of the invention, the at least one winglet 82 is an outwardly flared region of the suction tip wall 64 at the tip trailing edge 70. In yet another embodiment of the invention, both the pressure wall tip 62 and the suction wall tip 64 are flared outwardly at the tip trailing edge 70 to form the at least one winglet 82.

A local increase in thickness along the trailing edge is provided, including the tip trailing edge 70 and possibly the trailing edge 54 of the main body portion 42 of the blade. The increase in thickness is gradual and widens in a radially outward direction of the turbine rotor blade 40. The increase may be made in a linear manner or in a curve of higher order (FIG. 4). The term "local increase" refers to the thickening of the trailing edge at radial location that is from a radial point of the trailing edge that is at a radial length at least about 80% of the blade. In other words, the thickening of the trailing edge begins to occur at a radial length of the blade that is at least about 80% of the trailing edge length away from the root of the blade. The trailing edge thickness increase may occur from about 80% of the radial length of the trailing edge to an outermost location corresponding to about 100% of the radial length of the trailing edge. In another embodiment, the thickening occurs from about 95% to 100% of the radial length of the trailing edge. The entire radial length of the trailing edge of the blade has a constant width at all regions prior to initial widening of the trailing edge. Illustrated in conjunction with the examples provided above, the trailing edge thickness remains constant from the root portion to about 80% or about 95% of the radial length of the trailing edge. The embodiments provided above are merely examples and it is to be appreciated that the initial widening location may vary depending upon the application.

The widened region of the trailing edge comprises a trench 84 that is part of the squealer cavity 80, the advantages of which will be described in detail below. Inclusion of the at least one winglet 82 provides additional benefits. One benefit associated with the outwardly flared region associated with the tip suction wall 64, the tip region leakage is reduced, thereby improving efficiency of the turbine section 24. This is due to weakening of tip leakage vortices proximate the tip portion 46 of the turbine rotor blade 40, which tends to inhibit flow at this region. Another benefit associated with the at least one winglet 82 relates to further thickening of the tip trailing edge 70. This enhanced thickening of the tip trailing edge 70 further accommodates the trench 84 that is part of the squealer cavity 80.

The trench 84 comprises a depression, groove, notch, trench, or similar formation that is positioned at an aft end of the squealer cavity 80 and extends fully to the tip trailing edge 70 of the tip portion 46, thereby forming a flow path for a cooling flow that opens directly out of the tip trailing edge 70 into a main flow path of the turbine section 24. The trench 84 may comprise several different shapes, sizes, alignments, and configurations. For example, as illustrated in FIG. 2, the trench 84 may extend along a substantially linear path. Generally, the longitudinal axis of the trench 84 is aligned in an approximate downstream direction. In some embodiments, the trench 84 is slightly arcuate in nature. It is contemplated that the trench 84 is located closer to the pressure tip wall 62 than the suction tip wall 64. Because cooling air that flows out of the trench 84 generally moves toward the suction tip wall 64, this configuration may allow escaping cooling air to flow over a greater tip surface and thereby have a greater cooling effect than if the trailing edge trench 72 were located closer to the suction tip wall 64. However, it is contemplated that the trench 84 is located closer to suction tip wall 64 than the pressure tip wall 62. In addition, the trench 84, wherever located, may have a curved, linear, zig-zagging or serpentine path. In some embodiments, the trench 84 may be treated with a coating, such as a bond coat or other type of high-temperature coating. In some embodiments, the coating may be a corrosion inhibitor with high aluminum content, such as an alumide coating. An alumide coating is well-suited for the interior of the trench 84 because this location is relatively sheltered from rubbing against adjacent parts. Alumide coatings are highly effective against corrosion, but tend to wear quickly and, thus, normally would not be used on the blade tip area of a turbine blade. The trench 84 provides a cost-effective opportunity for its usage in this area.

The cross-sectional profile of the trench 84 may be approximately semi-elliptical in nature. Alternatively, though not depicted in the figures, the profile of the trench 84 may be rectangular, semi-circular, triangular, trapezoidal, "V" shaped, "U" shaped and other similar shapes, as well as other combinations of profiles and filet radii. The edge formed between the top of the pressure tip wall 62, the suction tip wall 64 and the radially aligned walls of the trench 84 may be sharp (i.e., a 90 degree corner) or, in some cases, more rounded in nature.

The depth of the trench 84 may be substantially constant as it extends toward the tip trailing edge 70. Note that as used herein, the depth of the trench 84 is meant to refer to the maximum radial height of the trench 84 at a given location on its path. Thus, in the case of a semi-elliptical profile, the depth of the trench 84 occurs at the inward apex of the elliptical shape. In other embodiments, the depth of the trench 84 may vary to become less or more deep relative to the upstream, originating location of the trench 84. Similarly, the width of the trench 84 may be constant or vary along an entire length of the trench 84.

Regardless of the precise configuration of the trench 84, the localized thickened tip trailing edge 70 and the at least one winglet 82 facilitates a widening of the trench 84 at the tip trailing edge 70. In particular, a space between outer portions of the pressure tip wall 62 and the suction tip wall 64 at the tip trailing edge 70 is defined and is referred to as a trailing edge tip thickness. Similarly, a space between outer portions of the pressure side wall 48 and the suction side wall 50 at the trailing edge 54 of the main body portion 42 is defined and is referred to as a trailing edge blade thickness. The trailing edge tip thickness is greater than the trailing edge blade thickness. In other words, a localized thickening of the trailing edge region of the overall turbine rotor blade 40. In one embodiment, the trailing edge tip thickness is about 1.1 times to about 3.0 times the thickness of the trailing edge blade thickness. In another embodiment, the trailing edge tip thickness is about 1.5 times to about 2.5 times the thickness of the trailing edge blade thickness. In yet another embodiment, the trailing edge tip thickness is about 1.95 times to about 2.05 times the thickness of the trailing edge blade thickness. The preceding examples are merely illustrative of the fact that the trailing edge tip thickness is greater than the trailing edge blade thickness. The local increase in the thickness at the tip of the blade adds extra local mass at the tip trailing edge portion. Addition of this mass on the tip will change the frequency of the blade in a favorable direction which assists in meeting aerodynamics requirements of the blade. The local increase in thickness targets a local mass addition at the trailing edge portion of the tip. Due to the location's high kinetic energy, it is very sensitive to changes in mass and stiffness, which will change the airfoil's mode shapes and frequencies. These changes in mode shapes and frequencies are used to the blade's advantage to avoid aeromechanic drivers and to meet design requirements.

As noted above, and according to the invention, the squealer cavity 80 includes the plurality of outlet holes 56 for expulsion of cooling flow. The plurality of outlet holes 56 is also present within the trench 84 for the provision of cooling air to this region of the squealer cavity 80 to keep the surrounding surface area of the tip portion 46 cool by convecting away heat and insulating the part from the extreme temperatures of the working fluid. More particularly, the coolant may better cool the tip portion 46 proximate the tip trailing edge 70. As shown, the trench cooling apertures may be regularly spaced through the trench 84 and and, according to the invention, they are positioned on the floor of the trench 84, i.e., near the deepest portion of the trench 84.

Advantageously, the embodiments described above decrease the tip leakage flow and weaken the tip leakage vortex, thereby reducing losses that directly impact overall turbine system efficiency. Increasing the trailing edge thickness at the tip portion 46, in combination with the winglet 82, allows higher width of the trench 84 at the squealer cavity 80. A wider trench facilitates a wider space for the cooling flow to escape from the trench opening at the immediate tip trailing edge 70, in contrast to closed squealer cavities that require the cooling flow to escape from the radially outward portion of the squealer cavity 80. By increasing the trailing edge thickness only proximate the tip portion, an aerodynamic benefit is achieved by accommodating the wider trench. In particular, the trench 84 better utilizes the cooling flow to extract work from the cooling flow as the cooling flow imparts a circumferential force along the trench wall as it flows toward the trailing edge. Rather than wasting the cooling flow by simply expelling it from the squealer cavity, the cooling flow assists in the rotation of the blade.

While the invention has been described in detail in connection with only a limited number of embodiments, it should be readily understood that the invention is not limited to such disclosed embodiments. While various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A turbine rotor blade (40) comprising:
a tip portion (46) having a pressure tip wall (62) and a suction tip wall (64), a tip leading edge (68) and a tip trailing edge (70), wherein the pressure tip wall and the suction tip wall define a trailing edge tip thickness;
a squealer cavity (80) at least partially defined by the pressure tip wall and the suction tip wall, the squealer cavity including a trench (84) extending fully to the tip trailing edge to form an open flow path out of the tip trailing edge (70); and
a suction side wall (50) and a pressure side wall (48) extending from a root portion (44) of the turbine rotor blade to the tip portion (46), wherein the suction side wall and the pressure side wall define a trailing edge blade thickness,
wherein the suction tip wall (64) or the suction tip wall (64) and the pressure tip wall (62) flare outwardly at the tip trailing edge (70); and
wherein the trailing edge tip thickness is greater than the trailing edge blade thickness;
further comprising a plurality of cooling holes extending radially throughout the turbine rotor blade, the plurality of cooling holes having a plurality of corresponding outlet holes (56), wherein the trench (84) has a floor and wherein some of said plurality of outlet holes (56) are positioned on the floor of the trench (84).

2. The turbine rotor blade of claim 1, wherein the suction tip wall comprises a winglet (82) proximate the tip trailing edge.

3. The turbine rotor blade of claim 1 or claim 2, wherein an overall trailing edge thickness of the turbine rotor blade is constant from a root portion to a radial length of the turbine rotor blade that is at least 80% of an overall length of the turbine rotor blade at the trailing edge, wherein the thickness of the trailing edge is gradually increased from a radial length of at least 80% of the overall length of the turbine rotor blade at the trailing edge to an outer tip location of the trailing edge.

4. The turbine rotor blade of any preceding claim, wherein the trailing edge tip thickness is 1.1 to 3.0 times the thickness of the trailing edge blade thickness.

5. The turbine rotor blade of any preceding claim, wherein the trailing edge tip thickness is 1.5 to 2.5 times the thickness of the trailing edge blade thickness.

6. The turbine rotor blade of any preceding claim, wherein the trailing edge tip thickness is about 1.95 to 2.05 times the thickness of the trailing edge blade thickness.

7. The turbine rotor blade of any preceding claim, further comprising a trench depth that is constant along an entire length of the trench.

8. The turbine rotor blade of any preceding claim, wherein the trench (84) is located closer to the pressure tip wall (62) than the suction tip wall (64).

9. A gas turbine engine comprising:
a compressor section (12);
a combustion section (14); and
a turbine section (24) comprising:
a plurality of turbine rotor blades (40) as claimed in claim 1 forming a plurality of turbine stages.

10. The gas turbine engine of claim 9, wherein the suction tip wall comprises a winglet proximate the tip trailing edge.

11. The gas turbine engine of claim 9 or 10, wherein the pressure tip wall comprises a winglet proximate the tip trailing edge.

12. The gas turbine engine of any of claims 9 to 11, wherein the pressure tip wall and the suction tip wall each comprise a winglet proximate the tip trailing edge.

13. The gas turbine engine of any of claims 9 to 12, wherein the trailing edge tip thickness is 1.5 to 2.5 times the thickness of the trailing edge blade thickness.

## Patentansprüche

1. Turbinenlaufschaufel (40), umfassend:
einen Spitzenabschnitt (46), der eine Druckspitzenwand (62) und eine Saugspitzenwand (64), eine Spitzenvorderkante (68) und eine Spitzenhinterkante (70) aufweist, wobei die Druckspitzenwand und die Saugspitzenwand eine Hinterkantenspitzendicke definieren;
einen Squealer-Hohlraum (80), der mindestens teilweise durch die Druckspitzenwand und die Saugspitzenwand definiert ist, wobei der Squealer-Hohlraum einen Graben (84) einschließt, der sich vollständig zu der Spitzenhinterkante erstreckt, um einen offenen Strömungsweg aus der Spitzenhinterkante (70) zu bilden; und
eine saugseitige Wand (50) und eine druckseitige Wand (48), die sich von einem Fußabschnitt (44) der Turbinenlaufschaufel zu dem Spitzenabschnitt (46) erstrecken, wobei die saugseitige Wand und die druckseitige Wand eine Hinterkantenschaufeldicke definieren,
wobei die Saugspitzenwand (64) oder die Saugspitzenwand (64) und die Druckspitzenwand (62) an der Spitzenhinterkante (70) nach außen trichterförmig aufgeweitet sind; und
wobei die Hinterkantenspitzendicke größer als die Hinterkantenschaufeldicke ist;
ferner umfassend eine Vielzahl von Kühllöchern, die sich radial über die Turbinenlaufschaufel erstrecken, wobei die Vielzahl von Kühllöchern eine Vielzahl von entsprechenden Auslasslöchern (56) aufweist, wobei der Graben (84) einen Boden aufweist, und wobei einige der Vielzahl von Auslasslöchern (56) auf dem Boden des Grabens (84) angeordnet sind.

2. Turbinenlaufschaufel nach Anspruch 1, wobei die Saugspitzenwand ein Winglet (82) nahe der Spitzenhinterkante umfasst.

3. Turbinenlaufschaufel nach Anspruch 1 oder 2, wobei eine Gesamthinterkantendicke der Turbinenlaufschaufel von einem Fußabschnitt zu einer radialen Länge der Turbinenlaufschaufel konstant ist, die mindestens 80 % einer Gesamtlänge der Turbinenlaufschaufel an der Hinterkante ist, wobei die Dicke der Hinterkante von einer radialen Länge von mindestens 80 % der Gesamtlänge der Turbinenlaufschaufel an der Hinterkante zu einer äußeren Spitzenposition der Hinterkante allmählich erhöht wird.

4. Turbinenlaufschaufel nach einem der vorstehenden Ansprüche, wobei die Hinterkantenspitzendicke 1,1 bis 3,0 Mal die Dicke der Hinterkantenschaufeldicke ist.

5. Turbinenlaufschaufel nach einem der vorstehenden Ansprüche, wobei die Hinterkantenspitzendicke 1,5 bis 2,5 Mal die Dicke der Hinterkantenschaufeldicke ist.

6. Turbinenlaufschaufel nach einem der vorstehenden Ansprüche, wobei die Hinterkantenspitzendicke etwa 1,95 bis 2,05 Mal die Dicke der Hinterkantenschaufeldicke ist.

7. Turbinenlaufschaufel nach einem der vorstehenden Ansprüche, ferner umfassend eine Grabentiefe, die entlang einer gesamten Länge des Grabens konstant ist.

8. Turbinenlaufschaufel nach einem der vorstehenden Ansprüche, wobei der Graben (84) sich näher an der Druckspitzenwand (62) als an der Saugspitzenwand (64) befindet.

9. Gasturbinenmotor, umfassend:
einen Verdichterbereich (12);
einen Brennkammerbereich (14); und
einen Turbinenbereich (24), umfassend:
eine Vielzahl von Turbinenlaufschaufeln (40) nach Anspruch 1, die eine Vielzahl von Turbinenstufen bilden.

10. Gasturbinenmotor nach Anspruch 9, wobei die Saugspitzenwand ein Winglet nahe der Spitzenhinterkante umfasst.

11. Gasturbinenmotor nach Anspruch 9 oder 10, wobei die Druckspitzenwand ein Winglet nahe der Spitzenhinterkante umfasst.

12. Gasturbinenmotor nach einem der Ansprüche 9 bis 11, wobei die Druckspitzenwand und die Saugspitzenwand jeweils ein Winglet nahe der Spitzenhinterkante umfassen.

13. Gasturbinenmotor nach einem der Ansprüche 9 bis 12, wobei die Hinterkantenspitzendicke 1,5 bis 2,5 Mal die Dicke der Hinterkantenschaufeldicke ist.

## Revendications

1. Aube de rotor de turbine (40) comprenant :
une partie de pointe (46) présentant une paroi de pression (62) et une paroi d'aspiration de pointe (64), un bord d'attaque de pointe (68) et un bord de fuite de pointe (70), dans laquelle la paroi de pression de pointe et la paroi d'aspiration de pointe définissent une épaisseur de pointe de bord de fuite ;
une cavité d'amincissement (80) définie au moins partiellement par la paroi de pression de pointe et la paroi d'aspiration de pointe, la cavité d'amincissement comportant une tranchée (84) s'étendant complètement jusqu'au bord de fuite de pointe pour former un trajet d'écoulement ouvert hors du bord de fuite de pointe (70) ; et
une paroi côté aspiration (50) et une paroi côté pression (48) s'étendant à partir d'une partie de pied (44) de l'aube de rotor de turbine jusqu'à la partie de pointe (46), dans laquelle la paroi côté aspiration et la paroi côté pression définissent une épaisseur d'aube de bord de fuite,
dans laquelle la paroi d'aspiration de pointe (64) ou la paroi d'aspiration de pointe (64) et la paroi de pression de pointe (62) s'évasent vers l'extérieur au niveau du bord de fuite de pointe (70) ; et
dans laquelle l'épaisseur de pointe de bord de fuite est supérieure à l'épaisseur d'aube de bord de fuite ;
comprenant en outre une pluralité de trous de refroidissement s'étendant radialement au travers l'aube de rotor de turbine, la pluralité de trous de refroidissement présentant une pluralité de trous de sortie correspondants (56), dans laquelle la tranchée (84) présente un fond et dans laquelle certains parmi ladite pluralité de trous de sortie (56) sont positionnés sur le fond de la tranchée (84).

2. Aube de rotor de turbine selon la revendication 1, dans laquelle la paroi d'aspiration de pointe comprend un winglet (82) à proximité du bord de fuite de pointe.

3. Aube de rotor de turbine selon la revendication 1 ou la revendication 2, dans laquelle une épaisseur globale de bord de fuite de l'aube de rotor de turbine est constante à partir d'une partie de pied jusqu'à une longueur radiale de l'aube de rotor de turbine qui est au moins 80 % d'une longueur globale de l'aube de rotor de turbine au niveau du bord de fuite, dans laquelle l'épaisseur du bord de turbine est progressivement augmentée à partir d'une longueur radiale d'au moins 80 % de la longueur globale de l'aube de rotor de turbine au niveau du bord de fuite jusqu'à un emplacement de pointe externe du bord de fuite.

4. Aube de rotor de turbine selon l'une quelconque revendication précédente, dans laquelle l'épaisseur de pointe de bord de fuite est de 1,1 à 3,0 fois l'épaisseur d'aube de bord de fuite.

5. Aube de rotor de turbine selon l'une quelconque revendication précédente, dans laquelle l'épaisseur de pointe de bord de fuite est de 1,5 à 2,5 fois l'épaisseur d'aube de bord de fuite.

6. Aube de rotor de turbine selon l'une quelconque revendication précédente, dans laquelle l'épaisseur de pointe de bord de fuite est d'environ 1,95 à 2,05 fois l'épaisseur d'aube de bord de fuite.

7. Aube de rotor de turbine selon l'une quelconque revendication précédente, comprenant en outre une profondeur de tranchée qui est constante sur toute la longueur de la tranchée.

8. Aube de rotor de turbine selon l'une quelconque revendication précédente, dans laquelle la tranchée (84) est située plus près de la paroi de pression de pointe (62) que la paroi d'aspiration de pointe (64).

9. Moteur de turbine à gaz comprenant :
une section compresseur (12) ;
une section de combustion (14) ; et
une section de turbine (24) comprenant :
une pluralité d'aubes de rotor de turbine (40) selon la revendication 1 formant une pluralité d'étages de turbine.

10. Moteur à turbine à gaz selon la revendication 9, dans lequel la paroi d'aspiration de pointe comprend un winglet à proximité du bord de fuite de pointe.

11. Moteur à turbine à gaz selon la revendication 9 ou 10, dans lequel la paroi de pression de pointe comprend un winglet à proximité du bord de fuite de pointe.

12. Moteur à turbine à gaz selon l'une quelconque des revendications 9 à 11, dans lequel la paroi de pression de pointe et la paroi d'aspiration de pointe comprennent chacune un winglet à proximité du bord de fuite de pointe.

13. Moteur à turbine à gaz selon l'une quelconque des revendications 9 à 12, dans lequel l'épaisseur de pointe de bord de fuite est de 1,5 à 2,5 fois l'épaisseur d'aube de bord de fuite.
